# EUROPÄISCHE PATENTSCHRIFT

(11) **EP 1 452 754 B1**
(45) Veröffentlichungstag und Bekanntmachung des Hinweises auf die Patenterteilung: **16.07.2008**
(21) Anmeldenummer: 04003099.1
(22) Anmeldetag: 12.02.2004
(51) Int. Cl.: F16C 29/04

(54) **Linearlager mit einer Kugelumlenkvorrichtung**
Linear motion guide with a ball return passage
Palier linéaire avec un élément déviateur de billes

(30) Priorität: 28.02.2003 DE 20303271 U
(43) Veröffentlichungstag der Anmeldung: 01.09.2004
(73) Patentinhaber: AB SKF, 415 50 Göteborg (SE)
(72) Erfinder: Geyer, Andreas, 97509 Kolitzheim-Unterspiesheim (DE)
(74) Vertreter: Kohl, Thomas

(56) Entgegenhaltungen:
- DE-A1- 19 923 719
- DE-U1- 9 011 444

## Beschreibung

Die Erfindung betrifft ein Linearlager mit einer Linearführung, auf der ein Schlitten translatorisch verschoben werden kann, wobei zwischen der Linearführung und dem Schlitten ein Vielzahl Kugeln angeordnet sind, die im Kontaktbereich zwischen Linearführung und Schlitten auf einer Geraden angeordnet sind, wobei sich an beiden Enden der Geraden Kugelumlenkabschnitte anschließen und wobei sich außerhalb des Kontaktbereichs der Kugeln zwischen Linearführung und Schlitten und im Anschluss an die Kugelumlenkabschnitte ein Kugelrücklaufabschnitt anschließt, so dass die Kugeln kontinuierlich entlang der Geraden zwischen der Linearführung und dem Schlitten, den Kugelumlenkabschnitten und dem Kugelrücklaufabschnitt umlaufen können.

Ein gattungsgemäßes Linearlager ist beispielsweise aus der DE 40 22 168 C2 bekannt. Dort kommt eine Kugelumlenkeinrichtung zum Einsatz, die aus einem U-förmigen Lagerstück besteht, das mit einer ebenen Grundfläche auf der Stirnfläche eines Tragkörpers aufgesetzt ist. Die Kugeln laufen zwischen der zylindrischen Außenfläche der Kugelumlenkeinrichtung und der Innenseite einer Umlenkhaube.

Eine ähnliche Lösung ist aus der DE 36 39 544 C2 bekannt. Dort kommt ein Zwischenstück zum Einsatz, das in eine Kugelumkehrspurrille eingepasst ist, um in einem Abschlussdeckel einen Kugelumkehrkanal auszubilden. Die äußere Oberfläche des Zwischenstücks ist flach ausgebildet und steht mit einer zylindrischen äußeren Hülse in Berührung. Die Kugeln rollen auf der Kugelumkehrspurrille des Zwischenstücks ab.

Gemäß der GB 911 077 wird eine Spurrille zur Umlenkung der Kugeln durch die Kombination Ausnehmungen in einem Endstück und von am Endbereich der Führungsschiene angebrachten halbkreisförmigen Erhebungen gebildet.

Nachteilig ist an den vorbekannten Lösungen, dass die Kugelumlenkabschnitte gerichtet montiert werden müssen und zumeist eine Unterscheidung in rechte und linke Ausführungen - für die beiden axialen Enden des Linearlagers - notwendig ist.

Der Erfindung liegt daher die **Aufgabe** zugrunde, ein Linearlager der eingangs genannten Art so fortzubilden, dass dieser Nachteil vermieden wird. Die Kugelumlenkeinrichtung des Linearlagers soll also einfacher montierbar sein und zudem eine gute Zentrierung der Kugeln bewerkstelligen. Weiterhin soll der Ein- und Auslauf aus dem Kugelumlenkabschnitt möglichst exakt und ohne Störkanten erfolgen können. Eine Unterscheidung zwischen linken und rechten Kugelumlenkelementen soll nicht mehr erforderlich sein.

Die **Lösung** dieser Aufgabe durch die Erfindung ist dadurch gekennzeichnet, dass der Kugelumlenkabschnitt ein Endteil und einen Kugelumlenker aufweist, wobei das Endteil eine muldenförmige Vertiefung zur Führung der Kugeln hat, wobei der Kugelumlenker einen halbkugelförmigen oder halbellipsoiden Abschnitt hat und wobei zwischen muldenförmiger Vertiefung und halbkugelförmigem bzw. halbellipsoiden Abschnitt im montierten Zustand des Linearlagers eine Umlenkbahn für die Kugeln gebildet wird.

Eine erste Weiterbildung sieht vor, dass der Kugelumlenker einen sich vom halbkugelförmigen oder halbellipsoiden Abschnitt erstreckenden stiftförmigen Abschnitt aufweist. Der stiftförmige Abschnitt kann dabei in der Linearführung fest angeordnet sein.

Bevorzugt ist der Kugelumlenker in Form eines Pilzes ausgebildet.

Schließlich kann vorgesehen werden, dass der Kugelumlenker mit einem Teil seines halbkugelförmigen oder halbellipsoiden Abschnitts an einem Abschnitt des Endteils anliegt, das der Kugelform angepasst ist.

Mit der erfindungsgemäß vorgeschlagenen Ausgestaltung eines Linearlagers werden die gestellten Aufgaben vollumfänglich gelöst. Eine Unterscheidung in linke oder rechte Kugelumlenkabschnitte ist nicht mehr erforderlich. Durch die Ausbildung des Kugelumlenkers als "Pilz" ist die Montage dieses Bauteils in sehr einfacher Weise möglich und bietet keine Möglichkeit für einen fehlerhaften Einbau. Das Linearlager kann daher in besonders einfacher Weise hergestellt und montiert werden.

In der Zeichnung ist ein Ausführungsbeispiel der Erfindung dargestellt. Es zeigen:
- Figur 1: schematisch in dreidimensionaler Ansicht den Endbereich eines Linearlagers mit einem Kugelumlenker in Explosionsdarstellung und
- Figur 2: das Endteil des Linearlagers mit Kugelumlenker.

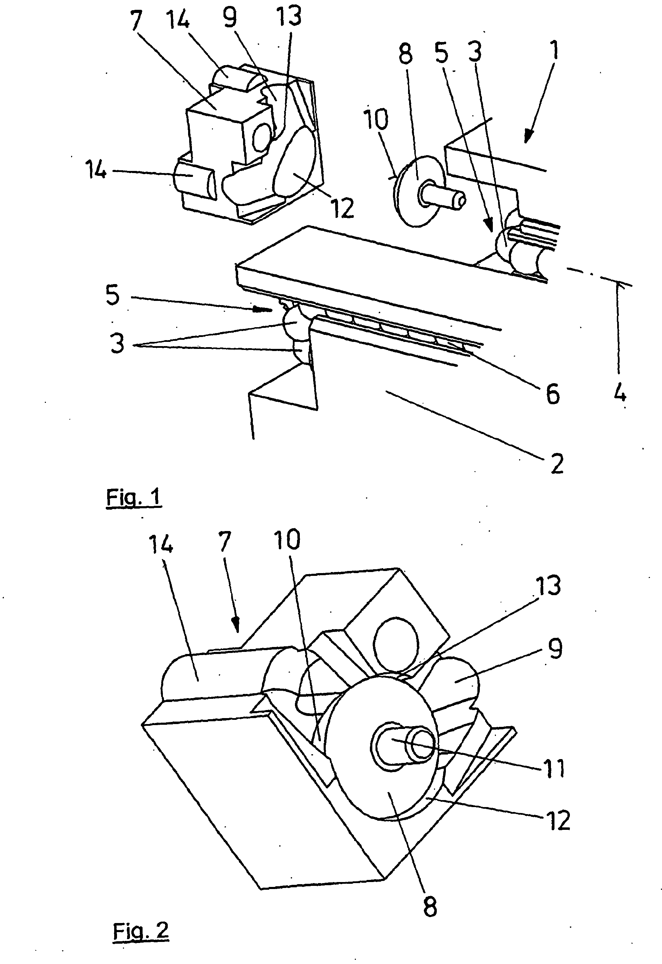

In Figur 1 ist ein Linearlager 1 zu sehen, das eine Linearführung 2 aufweist. Zur wälzgelagerten Linearbewegung ist eine Anzahl Kugeln 3 vorgesehen, die in üblicher Weise zwischen den Führungsbahnen der sich relativ zueinander linear beweglichen Teile angeordnet sind. Die Richtung des Kontaktbereichs zwischen den sich linear relativ zueinander beweglichen Teilen ist durch die Gerade 4 angegeben. In den axialen Endbereichen des Linearlagers 1 müssen die Kugeln 3 umgelenkt werden, wozu ein Kugelumlenkabschnitt 5 vorgesehen ist. Die umgelenkten Kugeln 3 werden in einen Kugelrücklaufabschnitt 6 in bekannter Weise zurückgeführt, um im nicht dargestellten anderen axialen Endbereich des Linearlagers 1 erneut umgelenkt zu werden und wieder in den Kontaktbereich zwischen den beiden sich relativ zueinander linear verschieblichen Teilen zu gelangen.

Der Kugelumlenkabschnitt 5 weist ein Endteil 7 auf, das am axialen Ende des Linearlagers 1 montiert ist. In Figur 1 ist insoweit eine Explosionsdarstellung zu sehen, da das Endteil 7 vom axialen Ende des Linearlagers 1 mit Abstand skizziert ist.

Zur Umlenkung der Kugeln 3 ist ein Kugelumlenker 8 vorgesehen, der die Form eines Pilzes aufweist. Er hat einen halbkugelförmigen oder halbellipsoiden Abschnitt 10, an den sich ein stiftförmiger Abschnitt 11 anschließt.

Indes weist das Endteil 7 eine muldenförmige Vertiefung 9 auf, die für die Umlenkung der Kugeln dient. Weiterhin ist in das Endteil 7 ein erster Abschnitt 12 sowie ein zweiter Abschnitt 13 eingearbeitet, der im Zusammenwirken mit dem Kugelumlenker 8 und namentlich mit dessen halbkugelförmigen bzw. halbellipsoiden Abschnitt 10 eine Umlenkbahn für die Kugeln 3 definiert.

Die Ausbildung des halbkugelförmigen bzw. halbellipsoiden Abschnitts 10 erfolgt dabei in Abhängigkeit der Umlenkgeometrie des Umlenkteils, in welchem die Kugeln 3 geführt werden. Die geometrische Form des Abschnitts 10 ist so gewählt, dass der Einlauf der Kugeln 3 in die Lastzone verbessert wird.

Alle Bauteile sind so konstruiert, dass sie sowohl für den rechten als auch für den linken axialen Endbereich des Linearlagers verwendet werden können. Das bedeutet, dass sie symmetrisch und um 90° schwenkbar einbaubar sind. Dadurch vereinfacht sich der Herstellungsaufwand des Linearlagers erheblich, da für die Fertigung der jeweiligen Teile nur noch ein Werkzeug benötigt wird.

Das Endteil 7 weist weiterhin zwei Nasen 14 auf, die mit einem kleinen Luftspalt in der zugehörigen Aufnahmenut des Endteils 7 im axialen Endbereich des Linearlagers 1 laufen. Dadurch kann eine Anpassung an die Laufbahn erfolgen und eine Art "Abstreifwirkung" für die Kugeln 3 bewerkstelligt werden.

Ein besonderer Vorteil des vorgeschlagenen Linearlagers ist die Zentrierung des Endteils 7 in zwei Achsrichtungen im Linearlager 1 über den Kugelumlenker 8. Sowohl der Einlauf als auch der Auslauf der Kugeln 3 werden durch die Zentrierwirkung verbessert, was das Laufverhalten des Linearlagers sehr positiv beeinflusst.

Der als "Pilz" ausgebildete Kugelumlenker 8 hat des weiteren durch den rotationssymmetrischen Querschnitt den wesentlichen Vorteil, dass er bei der Montage an der richtigen Position fixiert wird, ohne dass es einer besonderen Einstellmaßnahme oder Ausrichtung bedarf. Weiterhin wird durch die geometrische Ausgestaltung des Kugelumlenkers 8 sichergestellt, dass die Kugeln 3 optimal auf ihrer Umlenkbahn gehalten werden.

Während sonst die Kugeln im Umlenkabschnitt üblicherweise in einer konkaven Bahn laufen, ist dies beim vorgeschlagenen Linearlager nicht der Fall: Die halbkugelförmige bzw. halbellipsoide Oberfläche des Kugelumlenkers 8 stellt eine konvexe Gegenfläche für die Kugeln 3 dar, was einen Punktkontakt zu den Kugeln 3 in diesem Bereich herstellt und die Reibung positiv beeinflusst. Die Schmiegung zwischen Kugelumlenkabschnitt und Kugeln ist also nicht wie üblich, sondern gemäß einer Paarung konvexkonvex ausgebildet.

### Bezugszeichenliste

- 1: Linearlager
- 2: Linearführung
- 3: Kugel
- 4: Gerade im Kontaktbereich
- 5: Kugelumlenkabschnitt
- 6: Kugelrücklaufabschnitt
- 7: Endteil
- 8: Kugelumlenker
- 9: muldenförmige Vertiefung
- 10: halbkugelförmiger oder halbellipsoider Abschnitt
- 11: stiftförmiger Abschnitt
- 12: erster Abschnitt des Endteils
- 13: zweiter Abschnitt des Endteils
- 14: Nase

## Patentansprüche

1. Linearlager (1) mit einer Linearführung (2), auf der ein Schlitten translatorisch verschoben werden kann,
wobei zwischen der Linearführung (2) und dem Schlitten eine Vielzahl Kugeln (3) angeordnet sind, die im Kontaktbereich zwischen Linearführung (2) und Schlitten auf einer Geraden (4) angeordnet sind,
wobei sich an beiden Enden der Geraden (4) Kugelumlenkabschnitte (5) anschließen und
wobei sich außerhalb des Kontaktbereichs der Kugeln (3) zwischen Linearführung (2) und Schlitten und im Anschluss an die Kugelumlenkabschnitte (5) ein Kugelrücklaufabschnitt (6) anschließt,
so dass die Kugeln (3) kontinuierlich entlang der Geraden (4) zwischen der Linearführung (2) und dem Schlitten, den Kugelumlenkabschnitten (5) und dem Kugelrücklaufabschnitt (6) umlaufen können,
**dadurch gekennzeichnet, dass**
der Kugelumlenkabschnitt (5) ein Endteil (7) und einen Kugelumlenker (8) aufweist,
wobei das Endteil (7) eine muldenförmige Vertiefung (9) zur Führung der Kugeln (3) hat,
wobei der Kugelumlenker (8) einen halbkugelförmigen oder halbellipsoiden Abschnitt (10) hat und
wobei zwischen muldenförmiger Vertiefung (9) und halbkugelförmigem bzw. halbellipsoidem Abschnitt (10) im montierten Zustand des Linearlagers (1) eine Umlenkbahn für die Kugeln (3) gebildet wird.

2. Linearlager nach Anspruch 1, **dadurch gekennzeichnet, dass** der Kugelumlenker (8) einen sich vom halbkugelförmigen oder halbellipsoiden Abschnitt (10) erstreckenden stiftförmigen Abschnitt (11) aufweist.

3. Linearlager nach Anspruch 2, **dadurch gekennzeichnet, dass** der stiftförmige Abschnitt (11) in der Linearführung (2) fest angeordnet ist.

4. Linearlager nach einem der Ansprüche 1 bis 3, **dadurch gekennzeichnet, dass** der Kugelumlenker (8) die Form eines Pilzes aufweist.

5. Linearlager nach einem der Ansprüche 1 bis 4, **dadurch gekennzeichnet, dass** der Kugelumlenker (8) mit einem Teil seines halbkugelförmigen oder halbellipsoiden Abschnitts (10) an einem Abschnitt (12, 13) des Endteils (7) anliegt, das der Kugelform bzw. Ellipsoidenform angepasst ist.

## Claims

1. A linear bearing (1) with a linear guide (2), on which a slide can be displaced in a translatory manner,
wherein between the linear guide (2) and the slide there are arranged a plurality of balls (3) which are arranged along a straight line (4) in the contact zone between the linear guide (2) and the slide,
wherein ball deflection sections (5) adjoin both ends of the straight line (4) and
wherein a recirculating ball section (6) is adjoined outside the contact zone of the balls (3) between the linear guide (2) and the slide and adjacent the ball deflection sections (5),
so that the balls can circulate continuously along the straight line (4) between the linear guide (2) and the slide, the ball deflection sections (5) and the recirculating ball section (6),
**characterised in that**
the ball deflection section (5) has an end part (7) and a ball deflector (8),
wherein the end part (7) has a trough-like recess (9) for guiding the balls (3),
wherein the ball deflector (8) has a hemispherical or semi-ellipsoidal portion (10) and
wherein a deflection track for the balls (3) is formed between the trough-like recess (9) and the hemispherical or semi-ellipsoidal portion (10) in the assembled condition of the linear bearing (1).

2. A linear bearing according to Claim 1, **characterised in that** the ball deflector (8) has a pin-shaped portion (11) extending from the hemispherical or semi-ellipsoidal portion (10).

3. A linear bearing according to Claim 2, **characterised in that** the pin-shaped portion (11) is securely mounted in the linear guide (2).

4. A linear bearing according to any one of Claims 1 to 3, **characterised in that** the ball deflector (8) is mushroom-shaped.

5. A linear bearing according to any one of Claims 1 to 4, **characterised in that**, with a part of its hemispherical or semi-ellipsoidal portion (10), the ball deflector (8) adjoins a portion (12,13) of the end part (7) which is matched to the spherical shape or ellipsoidal shape.

## Revendications

1. Palier linéaire (1) avec un guidage linéaire (2) sur lequel peut coulisser en translation un chariot, dans lequel
- entre le guidage linéaire (2) et le chariot se trouve une pluralité de billes (3) qui, dans une zone de contact entre le guidage linéaire (2) et le chariot, sont disposées sur une droite (4),
- aux deux extrémités de la droite (4) sont raccordés des segments de renvoi de billes (5),
- à l'extrémité de la zone de contact des billes (3) entre le guidage linéaire (2) et le chariot fait suite une pièce de retour de billes (6) qui est raccordée aux segments de renvoi de billes (5), de sorte que les billes (3) peuvent circuler en continu le long de la droite (4) entre le guidage linéaire (2) et le chariot, des segments de renvoi de billes (5) et de la pièce de retour de billes (6)
ce palier linéaire étant **caractérisé en ce que** le segment de renvoi de billes (5) présente une partie d'extrémité (7) et une partie de renvoi de billes (8), la partie d'extrémité (7) présentant une cavité (9) en forme d'auge pour guider les billes (3), tandis que la partie de renvoi de billes (8) présente un élément (10) en forme de demi-sphère ou de demi-ellispoïde de sorte que, quand le palier linéaire (1) est à l'état monté, une piste de renvoi pour les billes (3) est formée entre cette cavité (9) et un élément (10) en forme de demi-sphère ou de demi-ellipsoïde.

2. Palier linéaire selon la revendication 1, **caractérisé en ce que** la partie de renvoi de billes (8) présente un élément (11) en forme de tige qui part de l'élément (10) en forme de demi-sphère ou de demi-ellipsoïde.

3. Palier linéraire selon la revendication 2, **caractérisé en ce que** l'élément (11) en forme de tige est monté fixement dans le guidage linéaire (2).

4. Palier linéaire selon une des revendications 1 à 3, **caractérisé en ce que** la partie de renvoi de billes (8) a la forme d'un champignon.

5. Palier linéaire selon une des revendications 1 à 4, **caractérisé en ce que** la partie de renvoi de billes (8) est appliquée par une partie de son élément (10) en forme de demi-sphère ou de demi-ellipsoïde, sur un élément (12, 13) de la partie d'extrémité (7), adapté à la forme sphérique ou ellipsoïdale.
